# EUROPEAN PATENT APPLICATION

(11) **EP 2 476 898 A1**
(43) Date of publication of application: **18.07.2012**
(21) Application number: 10856486.5
(22) Date of filing: 26.08.2010
(51) Int. Cl.: F03D 1/00, F03D 9/02, F03D 1/06

(54) **METHOD AND SOLAR-POWERED WIND PLANT FOR PRODUCING ELECTRIC POWER**

(71) Applicant: Alternative Energy Research Company Ltd, London W1 B 5TD (GB)
(72) Inventor: URSU, Ion Georgievich, H11/2-23 Bucharest (RO); POTAPOV, Yuriy Semenovich, Moskovskaya obl. 143500 (RU)
(74) Representative: Wirnsberger, Gernot
(86) International application number: PCT/RU2010/000469
(87) International publication number: WO 2012/026840

(57) **Abstract**

The invention relates to the field of producing electric power by artificially creating an air stream incident on a power-generating module (turbine) using solar-powered batteries. The power-generating module turns, compresses the air stream and directs the latter onto the working surface of a blade-less rotor. The rotor is designed such that a reactive effect is created on the working surfaces thereof, which improves the turbine characteristics. In the proposed method for producing power, use is made of the kinetic and potential energy of the air stream, and also the moment of inertia of the installation and solar-powered batteries. The efficiency of the method reaches 50%, while traditional fuel is economized on and emissions of CO₂ into the atmosphere are reduced.

## Description

### Technical field

The invention relates to the field of producing electric power and may be used in power engineering, other industries, and for household purposes. The claimed method and plant do not burn fossil fuels (coil, oil, gas, nuclear fuel, hydrogen) and do not produce any exhaust gases or hazard emissions.

### Background of the Invention

There are well-known different ways to generate electric power by internal combustion engines, gas turbine engines utilizing the conventional fuels. During operation such engines burn fuel and negatively affect the ecological environment. It is known that electric power may be also generated by conversing solar energy. However, efficiency of solar batteries, e.g. US E19/318, amounts to 19.5%. In time, their efficiency is permanently reduced due to the surface contamination of the solar batteries. At the same time, the solar batteries usually occupy large area and are expensive products. Notwithstanding these drawbacks the solar batteries are widely used to produce electric power during sunny days.

Presently, wind plants have been developed on the basis of blade wind turbines of large diameters (up to 60 m) kinematically connected to the electric generator.

The nominal mode for modern wind powered plants is achieved at a wind speed of 8-12 m/s but not more than 15 m/s.

The wind power-generating installation similar in many aspects to the claimed invention was described in invention patent RU 22177562. As specified in this invention, the wind turbine utilizes small blades and a cone fairing installed before such blades. The cone fairing directs an air stream to the blades that allows to increase wind speed additionally. At the same time, lower wind speeds and higher rotations are required to operate the wind turbine. The wind turbine with small blades and cone fairing kinematically connected to the electric generator producing electric power for consumers. As a rule, a wind turbine is installed at an elevation of 10 m and higher above the ground. The higher wind turbine elevation increases a probability for catching a required wind stream.

The drawback of the given wind-powered installation and method for producing electric power is direct wind speed dependence. As a rule, electric power generation is suspended due to the lack of the required wind stream speed. Such drawback is inherent to all modern wind plants notwithstanding the wind turbine design. A need for mounting the wind turbine on the high support secured to the heavy weight concrete plate is seen as another drawback of the wind powered installation in question. This is required to ensure its stability under strong windy conditions (more than 20 m/s). Naturally, such a design increases the project costs and results in vast material consumption.

One more drawback of the said wind plant is the lack of the wind guided blades and annular fairing. Such deficiency reduces the wind turbine efficiency because the angle at which the air stream impinges on the turbine blades is not optimal. Then, the air stream is reflected from the blades and radially put away by centrifugal forces in different directions. Due to the said phenomena, the air stream does not produce sufficient mechanic energy at the wind turbine and, hence, its efficiency factor reduces to 30%.

The objective of the present invention is to make up a method and installation for producing electric power which may operate permanently and independent of the natural wind stream speed. Such an installation is to have high efficiency and low noise level and operate using the solar, kinetic and potential energy.

### Disclosure of the Invention

In order to achieve said technical effects, a method has been developed to produce electric energy, the method comprising the steps of providing an artificial air stream with the required speed, providing a solar battery and a plurality of solar beam concentrators, transferring the electric current generated by the solar battery and the plurality concentrators to an electric motor rotating a gear, connecting the gear to a movable support base to receive a frame rotatable with the preset speed and a vortex-type air turbine.

It also should be noted that the method described herein provides for an air stream with a permanent speed of at least 12 m/s.

The air stream may be turned in the rotating direction of the turbine rotor by means of the guiding holes.

Besides, the turbines may be rotated in a circumferential direction with a radius of two meters at least and preplurality speed by means of solar energy and solar beams concentrators installed at an angle ranging from 20° to 45°.

The method also provides for partial electric power supply to the electric motor to rotate the frame.

The ongoing air stream may be preliminary compressed, accelerated and, then, turned and directed to the rotor working surface at an angle not more than 90° by means of the conic and annular fairings.

While being rotated, the turbines may utilize kinetic and potential energy of the artificial air stream and electric power of the solar batteries.

Additionally, a reactive effect may be created at the same time on all working surfaces of the rotors.

One more variant of the present invention covers a bladeless installation to produce electric power, including the generator, rotor connected to the generator, air compressing and retaining unit provided with a plurality of the guiding holes turning the air stream in the rotating direction of the rotor, means for energy transfer, and a plurality of the solar batteries.

The rotor may be disk-shaped, and the plurality of the holes may be located on its peripherals at an angle to the rotor disk surface. At the same time, the holes may have a concave working surface creating a reactive effect.

Besides, the said plurality of the holes may be formed as cylinders, cones or nozzles.

The installation may also include a partition installed before the rotor and having a plurality of the guiding holes. Such holes may guide the ongoing air stream on the rotor angularly, being preliminary turned into the rotating direction of the rotor.

The installation may also include an annular fairing to retain the turned air stream and direct it to the rotor working surface without any losses.

Additionally, the installation may include a cone fairing to increase the air stream speed and create necessary air pressure on the rotor holes installed before the partition.

The installation may also include a rotatable frame able to create an artificial ongoing air stream, in doing so, the preset rotation radius may be at least 2 m, and generate the necessary air stream speed.

The installation may include an electric motor with a gear rotating the frame and creating the ongoing air stream of the required speed. At the same time, the plurality of the solar batteries may be equipped with a plurality of mirrors.

Besides, the rotor and partition design may prevent the ongoing air stream from being stalled at speeds less than 60 m/s.

### Brief Description of Drawings

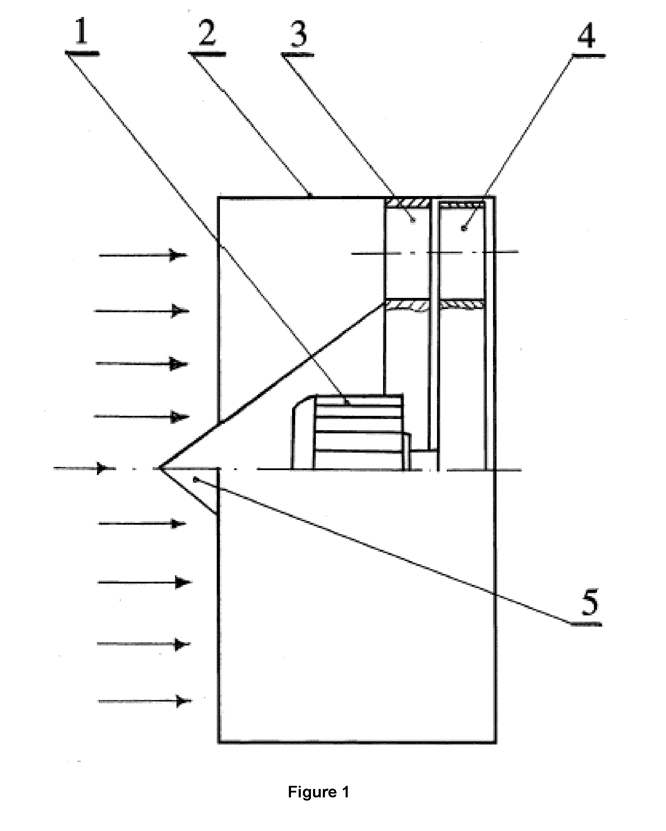

The bladeless turbine diagram is shown on Fig. 1.

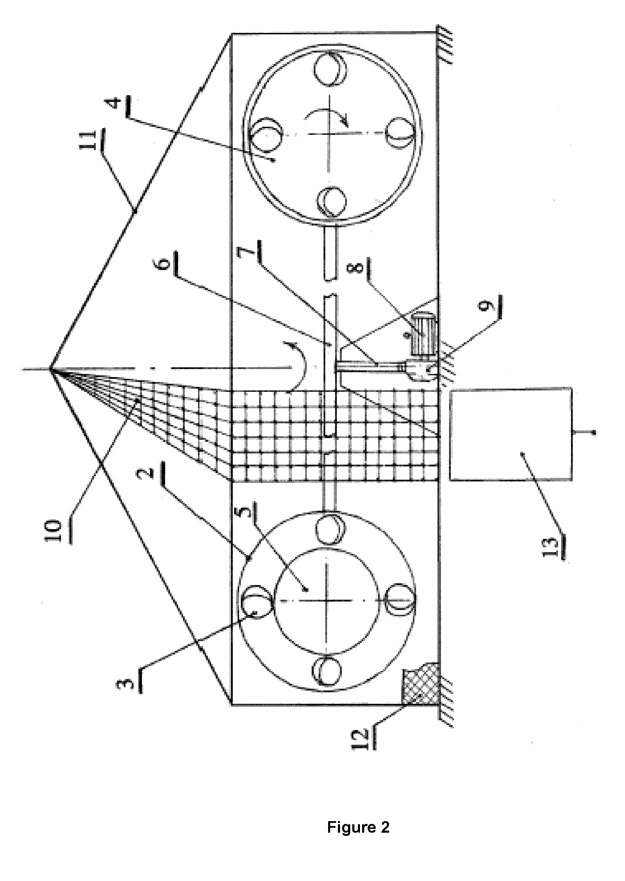

The diagram of the installation with bladeless turbines, solar batteries and solar beam concentrators (mirrors) is shown on Fig. 2.

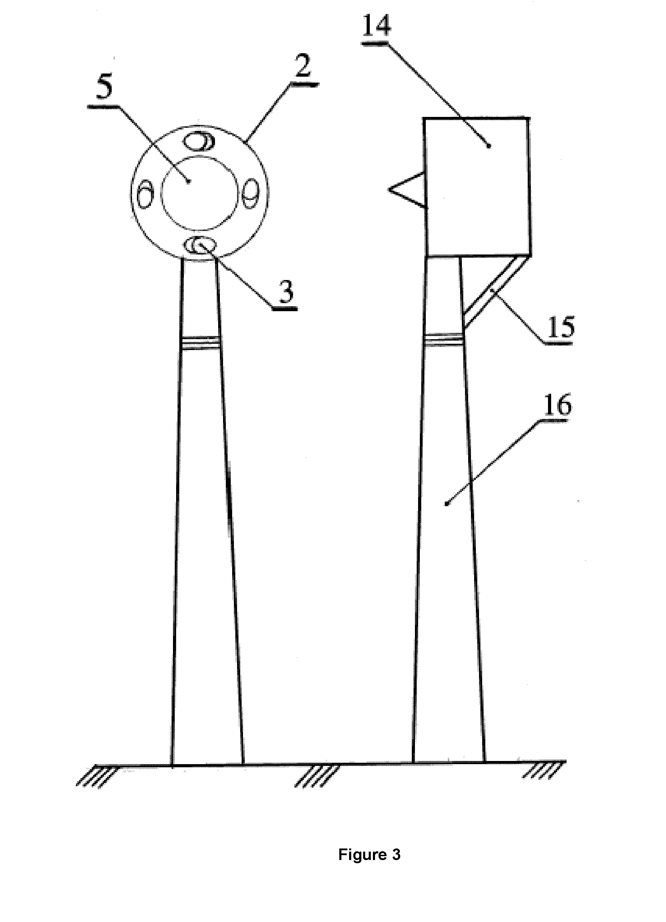

The bladeless wind power plant utilizing the natural air stream is shown on Fig. 3.

### The Best Embodiment of the Invention

The technical characteristics stated in the given method for producing electric power are achieved by means of creating the artificial air stream of the required speed in combination with the solar batteries (for example, solar panels) and solar beam concentrators (mirrors). The artificial air stream rotates the rotor of the vortex air turbine at a constant speed that ensures continuous generation of electric power.

The installation is equipped with the cone and annular fairings, partition with the guiding holes and rotor with inclined holes. The cone and annular fairings may be used as a unit for compressing and retaining the air stream. The rotor is kinematically connected to the generator. The installation is mounted on the rotatable frame. The frame is driven by the solar batteries or a plurality of the solar batters during the day-time, and at nights the frame drive is fed from electric power generated by itself.

In the preferred embodiment of the method and installation for producing power energy, a rotation radius of two meters at least at a tangential (angular) speed more than 12 m/s is used.

In the particular embodiment, two or more wind-powered modules (turbines) with a rotation radius not less than 2 m. are mounted on the rotatable frame. During the night time half of the produced electric power is supplied to consumers and the other half is spent for the frame rotation. Such a wind plant is started by an external power supply, solar batteries, mechanical means or mobile power plant.

Taking into account that as the air stream speed increases so does the rotor capacity in the third power, the generated electric power is sufficient to meet the consumers demand and rotate the frame. As increase in the frame rotating resistance is practically linear, the power consumption to rotate the frame will not be considerable.

In yet another embodiment, one frame with the power-generating modules is installed above the other upright. Thus, there are a sufficient number of the vertical power-generating modules to increase the plant capacity. The number of the modules (turbines) is not restricted by specific requirements (1, 2, 3, 4, 5, 6, etc.). However, it is preferable to use a single module rather than two or more even number of the modules (4, 6, 8, etc.). The vertical wind plant occupies an area in several times less than one horizontally-oriented of the same capacity.

The proposed method on creating the ongoing air stream may be also used for conventional wind plants with blades up to 60 meters in diameter. However, the known drawbacks inherent to the wind plants with large blades will take effect in the proposed method as well. (See Table 1). So, the use of conventional wind plants with the ongoing air stream is not economically feasible due to considerable capacity losses and large overall dimensions.

**Table No. 1**

| Wind plant capacity losses, % | | | | | |
|---|---|---|---|---|---|
| Turbine type | Tip losses | Losses for turning | Friction losses | Starting up losses | Total |
| Large blades | 30 | 10 | 7 | 5 | 52 |
| Small blades | 3 | 2 | 20 | 0 | 25 |

Table No.1 shows that the total losses amount to 52% and 25%, respectively for large and small blade turbines. Thus, the use of the small blade turbines with the ongoing air stream is more preferable. For the proposed method, the small holes in the turbine rotor are similar to the small blades of the wind turbines.

For the proposed method, the wind plant frame shall be made of a tube with minimal resistance to the ongoing air stream. The frame speed depends on the required ongoing air stream. The ongoing air speed is usually equal to angular (tangential) speed at the point on the determined rotation radius. For example, the necessary ongoing air stream is more than 10 m/s. Then, the rotation radius is assumed equal to 5 meters. Then, at 30 rpm of the frame the ongoing air stream at extreme point will be 15 m/s. At such an air stream speed even conventional wind plants generate a full capacity.

In the particular embodiment, the vortex bladeless turbine with the holes similar to the small blades will operate more efficiently than a convention wind plant because its rotating speed is twice higher and losses are considerably lower. The rotor holes may be of a cylindrical shape and inclined to the rotor-disk plane; they also may be provided conic or in the form of nozzles that facilitate the rotor rotational acceleration and creation of the ongoing air stream.

Taking into account that the solar-powered wind plant operates at the stable mode (i.e. mode in which amount of the generated power energy is sufficient to maintain its own performance and meet the consumers demand), the capacity is carried over from the rotor to generator without a multi-stage gear (multiplying gear). Conversely, in some cases at high rotor speeds a reducing gear may be required. For the method in question, there is no need in using any wind tracking and swiveling system as well as blade drive mechanism. The new method and installation do not require a plurality of mechanical components available in conventional wind plants. This increases the reliability, reduces the maintenance period and increases the service life of the proposed installation.

This method is suitable for vertical axial installations but from the technical point of view standard horizontal axial ones are preferable due to the blade overall dimensions. The Darrieus vertical axis wind turbines (modules are located at the bottom) have no technological advantage as compared with the horizontal axis ones in the proposed method because the power-generating module (turbine as shown in Fig. 1), including the generator, annular and cone fairings, rotor with the holes and partition with the guiding holes) is mounted not too high above the ground.

While increasing the rotor speed rate of the bladeless vortex turbine, it is possible to increase the generated power output at high speeds of the oncoming air stream up to 60 m/s. But for the large blade wind turbines, it is practically impossible due to the air flow stall from the blades at wind speeds more than 15 m/s. So, the operation period for the bladeless turbine of the established capacity at the oncoming air stream will be 3-4 times longer as compared with conventional wind turbines with blades up to 60 meters in diameter.

The proposed method and installation for producing power energy may continuously operate during the whole year with the annual efficiency of 95% to 98% as compared with 20% to 25% for convention wind plants the rates of which depend on natural wind stream. The use of additional solar batteries allows to generate even more electric power to meet the consumers demand. At the same time, the proposed wind plants produce lower noise levels than do conventional ones because they do not generate infrasonic sound. Hence, the proposed solar-powered wind plant may be installed in the vicinity of the facility consuming the produced power that reduces the costs related to power transmission lines.

It may be also noted that the manufacturing of the bladeless turbines affects the rotor rotation method. The lack of conventional blades (turbine blades) operating due to the produced uplift changes the method of the rotor rotation. For the proposed invention, the rotor is rotated due to creation of the reactive effect (also used in rocket and aircraft industries) and air pressure on the surface of the holes. In doing so, torsion torque is created simultaneously on all working surfaces of the turbine rotor holes what improves the turbine efficiency. The working surfaces of the turbine rotor are surfaces of the rotor holes.

The operating experience has proved that friction losses in such a turbine reach 20%, but the total losses are twice lower as compared with conventional wind plants.

The overall dimensions of the proposed bladeless turbine are 3-4 times less than ones of conventional wind plants, and, hence, its weight is significantly less at the same capacity. Testing of the vortex turbine with the guiding holes has shown that at the same capacity its air flow rate is several times less than for a conventional turbine with blades where uplift plays the same role as one for an aircraft wing. To some extent, the modern installations for conversing wind energy into electric power have reached its cost-saving limits. However, the proposed method and installation may considerably increase cost-saving of the conversion process due to the oncoming air energy at speed ranging from 15 m/s to 60 m/s. Within such a speed range conventional wind plants usually do not operate or their operation is not effective.

Naturally, such a big potential may be implemented in practice by increasing the ongoing air stream speed and reducing the overall dimensions of the air turbine. As the turbine capacity is raised in the 3rd power relative to the wind speed, the amount of additional energy will be quite considerable. At such speeds, more than 15 m/s, the blades of the conventional wind plants face a supercritical mode (similar to "wing stalling" one in aviation). So, their capacity is sharply reduced as well.

Generation of electric power by the proposed method and solar- powered wind plant does not depend on natural wind gusts and may be regulated that is very important for the consumers.

For the claimed method, no energy accumulators are required that considerably simplifies the plant design, reduces its overall dimensions and improves ecological effects.

For the preferable variant on implementing the invention, the installation is mounted under a shelter on which the solar batteries are installed. So, it is not affected by atmospheric precipitations that prolong its service life. The roof or shelter above the installation is made of inexpensive and durable materials. The lower part of the roof is protected by a screen preventing birds or animals from entering the working area.

The above-mentioned process on creating an air stream impinging on the turbine is shown here schematically only for understanding the essence of the invention. When air molecules are turned along the curved line within the guiding holes, their movement becomes less chaotic. Due to centrifugal forces and self- induced heating up, the molecules movement is accelerated in the rotor turning direction. At the same time, molecules move towards a free space provided for expansion, in this case they move to the outlets of the guiding holes and turbine rotor holes.

And when in conventional gas turbines gas molecules hit the turbine blades at an angle of approx. 30°, in this invention it is possible to direct air molecules to the working surface of the turbine at an angle of 90°.

Turning of the air stream before the rotor accelerates the air molecule movement which is impossible to achieve in conventional wind plants. It is known that while turning the air stream, the air flow rate increases and, hence, kinetic energy of the molecules increases as well. This leads to increase in the turbine capacity.

Such an effect is not used in any existing plants for converting air energy into electric one. At the same time, air does not change its physical and chemical properties and remains ecologically clean. Thus, the proposed method and installation have more effective noise characteristics. The noise produced by the turbine rotor and guiding holes partially arrested by the annular fairing and roof (if installed), and general noise characteristics are insignificant due to the lack of large blades which actually create a noisy field or low- frequency vibrations (infrasonic sound).

Besides, together with increase in the efficiency factor and design simplification (lack of blades) additional positive effects of the invention such as considerable reduce in the installation overall dimensions and weight shall be noted. It is possible to yield a capacity of wide range up to very high one by using the plurality of the vertical modules or increasing the ongoing air stream speed. The use of the solar batteries with the solar beam concentrators increases their efficiency. They ensure power supply to the frame drive motor with the wind turbines during day-time.

Fig. 1 shows an example of a turbine and preferable variant for implementing the method and installation for producing electric power by means of rotation of the rotor due to pressure of the ongoing turned wind stream. This variant includes the electric generator 1, annular fairing 2, guiding holes 3 turning the air stream, turbine rotor with inclined holes 4 and cone fairing 5.

Fig. 2 shows the diagram of two bladeless turbines installation. The frame 6 is mounted on the movable support base 7. The frame 6 is rotated by the motor (electric motor) 8 through a gear 9. The frame 6 is rotated with a constant speed. The motor 8 is connected to the solar batteries 10. The solar batteries 10 are equipped with the solar beam concentrators 13. The installation is provided with an enclosure 11 and protective screen 12.

Fig. 3 shows an example of the installation for producing electric power by the proposed turbine and natural wind. The turbine 14 on the rotatable frame 15 is directly mounted on the support base 16.

The operating principle of the installation utilizing natural wind stream and ongoing air stream is the same. But the air (wind) stream speed shall be not less than 6-8 m/s. The overall dimensions of the proposed installation (at the same capacity) are several times less than ones of conventional blade- type wind plants.

The given installation is operated as follows. The electric current from the solar battery with mirror concentrators is supplied to the motor 8 which rotates the gear 9. The gear 9 is kinematically connected to the movable support 7 on which the frame 8 is mounted. The turbine rotor with the holes 4 is rotated at the frame 6 ends due to the ongoing air stream of 15 m/s.

When the solar batteries are cut off from nominal current, power supply to the motor 8 is switched over to the generator 1. The installation is still rotated with the preset speed. The second generator ensures power supply to the consumers. The useful yield of such an installation may reach 50%. When the solar batteries 10 and mirror concentrators 13 are used, the efficiency rate may reach even 60%.

Thus, the claimed method and solar-powered wind plant allow to produce electric power in an ecological free manner without burning any fossil fuel as solar, kinetic and potential energy is used. In doing so, momentum of inertia of the rotated frame with the electric generators and turbines contributes to energy consumption as compared with the flywheel.

Taking in mind that the installation consists of few components its reliability is considerably increased. The designed operational life may reach 65 thousand hr. and more due to the lack of high-wearing details.

### Example 1

The manufactured installation includes the electric generator 1, rotor with holes 4, guiding holes 3, annular fairing 2, cone fairing 5 at an angle of 90°. The internal diameter of the annular fairing is 1000 mm. The number of holes 4 on the rotor and guiding holes 3 is twenty. The electric generator 1 is three-phase, with a capacity of 10 kW. The rotor is installed on the generator 1 axis. The frame 6 is mounted on the movable support base 7 having a rotational axis. The support base 7 is kinematically connected to the output shaft of the gear 9. The gear 9 rotates the electric motor 8 connected to the solar batteries 10 with the solar beam concentrators 13. Capacity is 7.5 kW. The motor (8) drive capacity is equal to 5.5 kW.

The gear (9) ratio is 100, hence, the frame 6 is rotated with a speed of 30 rpm. The rotation radius is four meters. So, the ongoing air stream is equal to 12 m/s. At such an air stream speed the generators 1 of both modules will yield a nominal capacity of 10 kW in 7 seconds (modules ensure an operating mode which may provide energy for the installation and consumers). After sunset, one of the generators is immediately switched over to the motor 8 and cuts off the solar batteries. At this moment the frame 6 with the generators 1 and turbines continues to run down so the start up current at the motor 8 is not too high. After connecting the motor 8 to the generator 8 the second generator is loaded. This generator ensures power supply to the consumers. The solar-powered wind plant operates in a stable mode without any failures, noise and vibrations with efficiency of approx. 50%.

### Example 2

The installation for producing electric power has been manufactured. The installation includes the generator 1 with a capacity of 1 kW, annular fairing 2 of 350 mm in diameter, cone fairing 5 at an angle of 70°, guiding partition with holes 3 at an angle of 45°. The generators are mounted on the moveable frame 6 on which two power-generating modules (turbines) are installed.

The rotor and guiding partition have 16 holes each. The power-generating modules have the same weight. The motor 8, frame 6 drives have a capacity of 0.8 kW at 3000 rpm. The gear (9) ratio is 1:50. The rotation radius is two meters. The installation is started up in the same manner as specified in example 1. The solar batteries rotate the frame with a speed of 60 rpm and the ongoing stream speed is approx. 12 m/s. At such a speed of the ongoing stream the vortex turbine and generators operate under the nominal mode. If necessary, one of the generators is switched over to the motor 8, and the second generator supplies electric power to the consumers. The installation runs under stable and practically noiseless conditions with an efficiency factor of 50%. During the day-time, the frame drive is rotated by the solar batteries with the concentrators (mirrors) that increases the amount of electric power to be supplied to the consumers.

The obtained results prove the fact that the solar-powered wind plant for producing electric power reduces power consumed for auxiliary needs and increase electric power for the consumers. The electric power output efficiency of the given plant may achieve 50% of the total power generated by the plant.

### Industrial applicability

In practice, the use of the claimed method and solar-powered wind plant will allow to reduce the amount of the burnt fuel and improve the ecological situation with respect to CO₂ emissions. The use of the proposed solar-powered wind plant as compared with large blade wind plants will allow to reduce overall dimensions and weight of the whole plant. In order to ensure safe operation of the bladeless turbine, the natural wind of lower speed may be used (Fig. 3).

## Claims

1. A method for producing electric power, the method comprising the steps of providing an artificial air stream of the required speed, providing a solar battery and a plurality of solar beam concentrators, transferring the electric current generated by the solar battery and a plurality concentrators to an electric motor rotating a gear, coupling the gear to a movable support base to receive a frame rotatable with the preset speed and a vortex air turbine.

2. The method of Claim 1, ***characterized in that*** air stream has a constant speed of at least 12 m/s.

3. The method of Claim 2, ***characterized in that*** the air stream is turned in the rotation direction of the turbine rotor by means of the guiding holes.

4. The method of Claim 3, ***characterized in that*** the turbine is rotated in a circumferential direction with a rotation radius of at least 2 m and at a preset speed by means of solar energy and solar beam concentrators mounted at an angle ranging from 20° to 45°.

5. The method of Claim 4, ***characterized in that*** electric power is partially supplied to the motor rotating the frame.

6. The method of Claim 3, ***characterized in that*** the ongoing air stream is preliminary compressed then accelerated and, at last, is turned and directed to the working surface of the rotor at an angle not more than 90° by means of the cone and annular fairings.

7. The method of Claim 6, ***characterized in that*** kinetic, potential energy of the artificial air stream and electric power of the solar batteries are used to rotate the turbines.

8. The method of Claim 7, ***characterized in that*** a reactive effect is simultaneously produced at all the rotor working surfaces.

9. A safe installation to produce electric power, comprising an electric generator, a rotor connected to the generator, an air compressing and retaining unit provided with a plurality of the guiding holes turning the air stream in the rotating direction of the rotor, means for energy transfer, and a plurality of the solar batteries.

10. The installation of Claim 9, ***characterized in that*** the rotor has a disk shape, and the plurality of the holes is located at its peripherals and inclined to the rotor disk surface, wherein said holes have the concave working surface to create the reactive effect.

11. The installation of Claim 10, ***characterized in that*** the said plurality of the holes is formed as cylinders, cones or nozzles.

12. The installation of Claim 10, ***characterized in that*** it further comprises a partition mounted before the rotor and having a plurality of the guiding holes, wherein said holes are adapted for guiding the ongoing air stream on the rotor angularly, being preliminary turned into the rotating direction of the rotor.

13. The installation of Claim 12, ***characterized in that*** it further comprises an annular fairing to retain the turned air stream and direct it to the rotor working surface without any losses.

14. The installation of Claim 13, ***characterized in that*** it further comprises a cone fairing to increase the air stream speed and create necessary air pressure on the rotor holes installed before the partition.

15. The installation of Claim 14, ***characterized in that*** it comprises a rotatable frame capable to create an artificial ongoing air stream, wherein the preset rotation radius is at least 2 m, and to generate the necessary air stream speed.

16. The installation of Claim 15, ***characterized in that*** it comprises an electric motor with a gear rotating the frame and creating the ongoing air stream of the required speed, wherein the plurality of the solar batteries may be equipped with a plurality of mirrors.

17. The installation of Claim 16, ***characterized in that*** the rotor and the partition are provided to avoid the stall of the ongoing air stream at speeds less than 60 m/s.
